Europäisches Patentamt

(19) European Patent Office

Office européen des brevets

(11) Publication number: **0 067 571**
**A1**

(12) **EUROPEAN PATENT APPLICATION**

(21) Application number: **82302697.6**

(22) Date of filing: **26.05.82**

(51) Int. Cl.³: **C 08 J 7/12**

(30) Priority: **12.06.81 IL 63084**

(43) Date of publication of application:
**22.12.82 Bulletin 82/51**

(84) Designated Contracting States:
**AT BE CH DE FR GB IT LI NL SE**

(71) Applicant: **BEN-GURION UNIVERSITY OF THE NEGEV RESEARCH AND DEVELOPMENT AUTHORITY**
**P.O.Box 1025**
**Beer Sheva(IL)**

(72) Inventor: **Forgacs, Chaim**
**12 Yehoyachin Street**
**Beer Sheva(IL)**

(72) Inventor: **Messalem, Rami**
**8 Chazal Street**
**Beer Sheva(IL)**

(74) Representative: **Whalley, Kevin et al,**
**Marks & Clerk 57/60 Lincoln's Inn Fields**
**London WC2A 3LS(GB)**

(54) **Surface-treated organic polymers.**

(57) The invention provides a non-conductive water impermeable organic polymeric plastic material having an ionically conductive surface and having $SO_3^-$ ions directly bonded to the outer surface thereof. The invention also provides a method for imparting improved surface properties to a non-conductive water impermeable organic polymeric plastic material, the properties including improved antistatic, anti-soiling, antifogging, dye-ability, printability, coatability, platability, dust-repelling, adhesiveness with commercially available glues and combinations of these properties, the method comprising sulfochlorinating the surface of the polymeric plastic material and then introducing in place of the chlorine atoms of the resulting sulfochlorinated product groups selected from hydroxyl and basic groups to produce an ionically conductive surface on the material having $SO_3^-$ ions directly bonded to the other surface thereof.

EP 0 067 571 A1

Croydon Printing Company Ltd.

"ORGANIC POLYMERIC PLASTIC MATERIALS, METHOD FOR THE
PRODUCTION THEREOF, AND SURFACE TREATED ARTICLES
OBTAINED THEREFROM"

The present invention relates to organic polymeric
plastic materials and to a method for the production
thereof, and to surface treated articles obtained
therefrom.

More particularly the invention relates to a non-
-conductive water impermeable organic polymeric plastic
material having an ionically conductive surface and
improved surface properties.

The invention also relates to a method for improving in particular the antistatic and antifogging
properties of such plastic materials, and to plastic
articles having such properties.

It is known to incorporate antistatic additives to
plastic materials during the course of processing. Such
additives, for example fatty amine derivatives, are not
part of the polymer matrix and in the course of time
they migrate from the plastic and no longer provide the
antistatic properties desired.

It has furthermore been known from U.S. Patent
No. 3 036 930 to obtain good adhesive coatings and
printings on polyolefin surfaces by treating these
surfaces in a reaction chamber with a mixture of gaseous
chlorine and sulfur dioxide with simultaneous irradiation to achieve sulfochlorination of such surfaces with SO$_2$Cl groups.

It has now been surprisingly discovered that when non-conductive water impermeable organic polymeric plastic materials are sulfochlorinated and then further treated to replace the chlorine atoms of the sulfochlorinated polymer with groups selected from hydroxyl and basic groups to produce on the material an ionically conductive surface having SO$_3^-$ ions directly bonded to the outer surface of the material, then the material is imparted with improved surface properties having many applications and uses.

Thus the present invention provides a method for imparting improved surface properties to a non-conductive water impermeable organic polymeric plastic material, such properties including improved antistatic, anti-soiling, antifogging, dye-ability, printability, coatability, platability, dust-repelling, adhesiveness with commercially available glues and combinations of such properties, the method comprising sulfochlorinating the surface of the polymeric plastic material, and then introducing in place of the chlorine atoms of the resulting sulfochlorinated product groups selected from hydroxyl and basic groups to produce an ionically conductive surface on the material having SO$_3^-$ ions directly bonded to the outer surface thereof.

The present invention also provides a non-conductive water impermeable organic polymeric plastic material having an ionically conductive surface and having SO$_3^-$ ions directly bonded to the outer surface thereof.

For various uses and applications it is important for objects to have antistatic properties, i.e. surfaces which exhibit conductivity and hydrophilicity. Such applications include packaging materials, furniture, phonograph records, carpeting, etc. for dust repelling properties and electrostatic shock resistance, or in greenhouse covers having antifogging properties. By conferring hydrophilicity to films or synthetic fabrics, the soiling as well as the electrostatic charge accumulating tendency in such materials is minimized.

It has further been found that when plastics such as polyolefins, e.g. polyethylene, polypropylene, polybutlylene etc., polyvinylchloride(PVC), polystyrene, polyesters, polyamides and copolymers thereof or any other polymer or plastic able to undergo surface sulfochlorination are subjected to the above treatment after the sulfochlorination, they result in products having excellent antistatic properties which are permanent and withstand laundering and washing and also may exhibit improved dye-ability, printability, coatability, platability, dust-resistance, adhesiveness with commercially available glues and/or anti-fogging properties or combinations thereof.

In Israeli Patent Nos. 14720 and 26598 and in U.S. Patent No. 3 388 080 there are described and claimed processes for the production of permselective membranes, i.e. water permeable sheets of ion exchange material which conduct electricity predominantly by movement of negative or positive ions, for use in electrodialysis, by the sulfochlorination of polyolefin sheets with subsequent hydrolysis of the sulfochlorinated intermediate to yield cation selective membranes on the one hand, and introduction of free amino groups or quaternary ammonium groups to yield anion selective membranes on the other, thereby imparting ion exchange properties within the membrane matrix. As noted however, these patents relate to the preparation of water permeable ion exchange membranes wherein the whole polymer bulk is sulfochlorinated and then treated to yield cation and anion selective membranes and these patents therefor do not teach or suggest the preparation or the advantageous properties of the non-conductive water impermeable surface treated plastics of the present invention.

While the product prepared, as indicated, is very different from the permselective membranes of the prior art patents, nevertheless the process for conducting the surface sulfochlorination and subsequent formation of $SO_3^-$ ion sites is analogous to the methods for forming such sites with the membrane matrices of Israeli Patent Nos. 14720 and 26598 and U.S. Patent No. 3 388 080 and the process for conducting the surface sulfochlorination may also be as described in U.S. Patent No. 3 036 930.

Thus in one aspect of the invention the surface sulfochlorination is effected by treating the plastic surface with gaseous chlorine and sulfur dioxide in the presence of light radiation and then the sulfochlorinated product can be hydrolyzed with an aqueous alkaline solution or reacted with a basic group selected from amines and quaternary ammonium derivatives whereby an $SO_3^-$ surface charge is obtained on the surface of the material.

In a preferred embodiment of the present invention the method comprises reacting the surface of a non--conductive water impermeable plastic body referred to above with gaseous chlorine and sulfur dioxide in a ratio of 10:1 to 1:20, preferably in a ratio of 4:1 to 1:4, and subsequently hydrolyzing the sulfochlorinated surface with aqueous alkaline solution. The sulfochlorination reaction is carried out in the presence of a light source and ordinary incandescent light has been found to be sufficient. Of course higher energy light sources such as mercury lamps may be used. No special temperature control seems to be required and the reactions can be carried out satisfactorily at ambient temperatures. Of course the light source will usually raise the temperature of the environment a few degrees.

The aqueous alkaline solution for the hydrolysis can be of any concentration; however, a 1% to 30% solution is preferred and a 5% to 15% solution appears to be most practical.

The invention will be further described with reference to the following illustrative Examples.

EXAMPLE 1

A 0.1 mm thick film of water impermeable low density polyethylene was reacted photochemically in a glass chamber for 10 minutes with a gaseous mixture of sulfur dioxide and chlorine (3:1) at ambient temperature. The reaction was carried out under an ordinary 150 watt incandescent lamp. The surface treated film was then hydrolyzed for two hours with 10% aqueous NaOH solution at room temperature. The film was then washed and dried. It had a charge decay time of 0.08 seconds as measured by British Standard Method No. 2782 part 2 : Method 250A. (rated "excellent"). The film was also inserted into a chamber containing super-saturated water vapour and it did not fog up. The film thus showed excellent antistatic and antifogging properties and the above treatment had no adverse effect on its original physical properties.

EXAMPLE 2

A bundle of low density polyethylene fibres of 0.2mm diameter each was reacted for five minutes with gaseous sulfur dioxide and chlorine, hydrolyzed, washed and dried as in Example 1. The measured charge decay time was 0.12 second (rated "very good"). Its tensile strength improved when compared to unreacted fibres, and its electrical resistance was less than $1.10^3$ ohms. The moisture content of the treated surface was about 20%.

EXAMPLE 3

A section of PVC profile was subjected to the same treatment as described in Example 1, except that the sulfochlorination was carried out for 15 minutes. The final sulfochlorinated and hydrolyzed PVC profile was introduced into a dust chamber together with an untreated control. The treated profile collected much less dust· than the control and its electrical resistivity was less than $5 \times 10^4$ ohms.

EXAMPLE 4

A polypropylene film treated as in Example 1 was immersed in a 1% aqueous solution of methylene blue (a cationic dye). Upon removal from the solution and after washing, the surface of the film was dyed blue and the colour would not wash off.

EXAMPLE 5

A section of PVC profile was reacted with sulfuryl chloride vapour under irridation with direct sunlight curing for a two hour period. The treated profile was washed with carbon tetrachloride and then immersed in a solution of 1 part by volume of ethylenediamine in two volumes of dry dioxane and then kept at room temperature for 5 hours. The resulting product was quarternized with

0067571

50% (vol.) alcoholic ethylene dibromide. The treated profile was introduced into a dust chamber with an untreated control and collected much less dust than the control.

EXAMPLE 6

A panel of Surlyn$^R$ produced by E. I. DuPont and described as a polyolefin copolymer was subjected to the same treatment as described in Example 3. The resulting panel exhibited improved anti-soiling and antistatic properties and was found to be especially useful as a flooring surface.

C L A I M S :

1.      A non-conductive water, impermeable organic
polymeric plastic material, characterized by having
an ionically conductive surface and having $SO_3^-$ ions
directly bonded to the outer surface thereof.

2.      A plastic material as claimed in Claim 1,
characterized in that the said plastic is selected
from polyolefins, polystyrene, polyvinylchloride,
polyesters, polyamides and copolymers thereof.

3.      A method for imparting improved surface properties
to a non-conductive water impermeable organic polymeric
plastic material, characterized by comprising sulfochlorinating the surface of the polymeric plastic
material, and then introducing in place of the chlorine
atoms of the resulting sulfochlorinated product groups
selected from hydroxyl and basic groups to produce an
ionically conductive surface on the said material having
$SO_3^-$ ions directly bonded to the outer surface thereof.

4.      A method as claimed in Claim 3, characterized in
that the said sulfochlorination is effected by treating
the plastic material surface with gaseous chlorine and
sulfur dioxide in the presence of light radiation.

5.      A method as claimed in Claim 3 or 4, characterized
by hydrolyzing the said sulfochlorinated product with
aqueous alkaline solution whereby an $SO_3^-$ surface charge
is obtained on the surface of the material.

6.      A method as claimed in any of Claims 3 to 5,
characterized in that the said basic groups are selected
from amines and quaternary ammonium derivatives.

7.    A plastic flooring surface produced from non-
-conductive water impermeable organic polymeric material
imparted with improved surface properties according to
the method as claimed in any of Claims 3 to 6.

8.    A non-conductive water impermeable polymeric
plastic material having an ionically conductive surface
with enhanced properties of printability, coatability,
platability, dye-ability and combinations thereof,
produced according to the method as claimed in any
of Claims 3 to 6.

0067571

**European Patent Office**

**EUROPEAN SEARCH REPORT**

Application number

EP 82 30 2697

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 952 111 (HERCULES POWDER) *Claims 1,2,8,9,10; page 1, line 60 - page 2, line 11; examples 4,5; page 7, lines 6-8* | 1-5,8 | C 08 J 7/12 |
| Y | *Examples 1,2,3,6-15,18* | 3,6,7 | |
| Y | US-A-3 388 080 (F.DE KÖROSY et al.) *The whole document* | 1-6 | |
| Y | CH-A- 396 406 (MONTECATINI) *Subclaims 5,6,7,8; example 3* | 1-3,6 | |
| Y | CHEMICAL ABSTRACTS, vol. 88, no. 18, 1st May 1978, page 74, no. 122735f, Columbus Ohio (USA); G.N.GEL'FMAN et al.:"Protection of structures and installations in the chemical and petrochemical industries". & SB. TR. - NAUCHNO-ISSLED. INST. PROM. STROIT. (UFA) 1976, 17(2), 193-208. *Abstract* | 7 | **TECHNICAL FIELDS SEARCHED (Int. Cl. ³)**<br><br>C 08 J |

The present search report has been drawn up for all claims

| Place of search | Date of completion of the search | Examiner |
|---|---|---|
| THE HAGUE | 28-09-1982 | HALLEMEESCH A.D. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82